# EUROPEAN PATENT APPLICATION

(11) **EP 3 955 195 A1**
(43) Date of publication of application: **16.02.2022**
(21) Application number: 20190874.6
(22) Date of filing: 13.08.2020
(51) Int. Cl.: G06Q 10/10

(54) **DIGITAL PROCESS CONTROLLER AND A METHOD FOR A PRODUCTION PROCESS OF A COMPLEX COMPOSED END PRODUCT**

(71) Applicant: CANON KABUSHIKI KAISHA, OHTA-KU Tokyo 146-8501 (JP)
(72) Inventor: DE JONG, Frederik, Venlo (NL); VONS, Johan G., Venlo (NL); PETERS, Johannes, Venlo (NL); BANDEA, Vasile, Venlo (NL)
(74) Representative: Canon Production Printing IP Department

(57) **Abstract**

Digital process controller and a method for controlling a production process of a complex composed end product by process jobs. Each process job is a pre-print job, a print job or a finishing job. The digital process controller comprises a multi-device time scheduler and is connected to a digital network. Content and print and finishing specifications of the complex composed end product are received via the digital network. A process recipe is received for the complex composed end product. The process recipe comprises a plurality of process steps and the relationships between the process steps. The production of the complex composed end product is decomposed into the plurality of process steps. For each process step at least one processing device is assigned intended to execute the process step according to the process recipe, and at least one process job to be scheduled by the multi-device time scheduler for execution by the corresponding at least one processing device. For each process step the at least one process job is submitted to the assigned at least one processing device. Operator instructions are provided for the processing devices via the digital network to at least one operator computer device or by printing the operator instructions. For each process step status and progress information of the at least one process job is received from the corresponding processing device during execution of the process step. The received status and progress information of the process steps is combined into a status and progress information of the creation process of the complex composed end product. The production process of the complex composed end product is controlled by means of the multi-device time scheduler and the status and progress information of the production process of the complex composed end product.

## Description

### FIELD OF THE INVENTION

The invention relates to a digital process controller for controlling a production process of a complex composed end product by process jobs, each process job being a pre-print job, a print job or a finishing job, the digital process controller comprising a multi-device time scheduler and connected to a digital network and configured to receive content and print and finishing specifications of the complex composed end product via the digital network.

### BACKGROUND OF THE INVENTION

Today, typically the focus in production of a complex composed end product is on the individual print devices and associated print jobs for those devices.

However, production in graphic arts environments more and more involves complex composed end products (like e.g. books) that are realized through multiple process steps on different printing and finishing devices. Such a production process of a complex composed end product involves the aspects of determining the product parts needed and the process steps required to produce the product parts, passing instructions to operators, locating the independent product parts and tracking the status of the independent product parts. Due to all these aspects together the production of a complex composed end product is an error prone process. Therefore support of the production on a factory level, rather than per device, has much value.

It is an object of the invention to provide a digital process controller and a method therefor in order to improve the production process of a complex composed end product.

### SUMMARY OF THE INVENTION

The digital process controller according to the invention, in order to achieve this object, is configured to receive a selection of a process recipe for the complex composed end product, the process recipe comprising a plurality of process steps and the relationships between the process steps, to assign for each process step at least one processing device intended to execute the process step according to the process recipe, and to display, for each of the assigned processing devices respectively, at least one process job derived for each process step and scheduled by the multi-device time scheduler for execution.

The relation between the different process steps is saved as a process recipe, and this relational knowledge is used and available at all relevant moments and places in the production process of the complex composed end product, both in terms of status and progress, as well as towards specific operator instructions for the individual process steps.

According to an embodiment the digital process controller is configured to decompose the production of the complex composed end product into the plurality of process steps, to derive for each process step from the process recipe at least one process job to be scheduled by the multi-device time scheduler for execution by the corresponding at least one processing device, to submit for each process step the at least one process job to the assigned at least one processing device, to provide operator instructions for the processing devices via the digital network to at least one operator computer device or by printing the operator instructions,to receive for each product step status and progress information of the at least one process job from the corresponding processing device during execution of the process step, to combine the received status and progress information of the process steps into a status and progress information of the creation process of the complex composed end product, and to control the production process of the complex composed end product by means of the multi-device time scheduler and the status and progress information of the production process of the complex composed end product.

By putting the focus on the complex composed end product, relationships between devices, process steps, sequence and timing, and device/process status become a central way of managing the production process of the complex composed end product. The relation between the different process steps in the production process is saved as a process recipe, including operator instructions, and this knowledge is used and available at all relevant places in a user interface of the digital process controller. The user selects the process recipe he wants. A collection of process recipes can be created by the user by means of a process recipe creation software application which may reside on the digital process controller. In another embodiment the process recipe creation software application is residing on another computer connected to the network and submits recipes to the digital process controller for storing in a dedicated recipe storage on the digital process controller. The digital process controller - by means of the process recipe - establishes which process steps to be executed, in which order, and how, i.e. which software applications are used in the pre-printing process steps, which devices to be used in the printing and finishing process steps, and which device/operator instructions to be provided. The digital process controller also establishes the dependencies between the process steps, and executes them in the right order and places them in the correct sequence order in a multi-device time schedule controlled by the multi-device time scheduler.

In the past, a digital process controller was configured to decompose a product into individual print jobs, but the individual print jobs were unmanaged individual entities from there on.
The present invention improves the control of the processing of the complex composed end product since the burden of specifying and relating different pre-printing, printing and finishing jobs is now done once, i.e. by an expert user who has designed the process recipe, and by doing so said burden is taken away from the operators during execution. For example when two print jobs are related, for example the book block and the associated cover, the digital process controller knows about this relation and shows and uses this relation. Operators are provided with the instructions derived from the process recipe.

The process recipe may also be called "workflow" hereinafter.

A process step produces a product part which is the end result of the process step. The product part may be in a digital form in case of a pre-printing step, or may be in a physical form in case of a printing or finishing step. One or more devices may be involved at the execution of the process step. Also one or more process jobs may be involved in a process step.

According to an embodiment the process recipe is representable by a directed graph made up of a set of vertices connected with edges, each edge having an associated direction, wherein the vertices represent the process steps and the direction of an edge between two vertices represent a sequence order of execution of the corresponding process steps.

According to an embodiment the directed graph is a weighted directed graph, wherein the weight on a vertex of the weighted directed graph represents an estimated execution time of the process step represented by the vertex, the estimated execution time being determined by the digital process controller.

According to an embodiment the process recipe comprises parallel branches, each branch representing a process step of the complex composed end product or an alternative process step of the complex composed end product based on conditional branching.

According to an embodiment the digital process controller comprises a track and trace mechanism for tracking and tracing the status and progress information of each process step. The relations between the different steps in production of the product parts, also in terms of sequence and timing, are used in the production of the complex composed end product in order to support planning and tracking of production on factory level, rather than per device only. A printer or finisher having a printer controller or a finisher controller respectively, having a digital connection to the digital process controller will report a job status, for example "ok", "failure", "printing", "finishing" and may report also progress of the process job. For manually operated devices, for example off-line finishers, the operator will indicate that a job is ready or failed via a user interface of the digital process controller according to the invention.

The invention also relates to a user interface for a digital process controller according to the invention, wherein the user interface is configured to display an editable representation of the selected process recipe, an overview of the derived process jobs, an overview of the assigned plurality of processing devices, operator instructions and a device status for each processing device, the status and progress information of the process steps, a multi-device time schedule for the process jobs submitted to the plurality of processing devices, and the status and progress information of the production process of the complex composed end product.

According to an embodiment the user interface is configured to display a list of at least one complex composed end product to be processed, and, upon selection of the complex composed end product from the list, representations of the process jobs derived for the complex composed end product in the multi-device time schedule are distinguishable from representations of process jobs in the multi-device time schedule derived for other complex composed end products from the list by means of a visual appearance aspect of the representations of the process jobs derived for the complex composed end product.

According to an embodiment the visual appearance aspect is at least one out of a colour, a shadow, a hatch or at least one deviating dimension or shape of a box item in the representations.

The invention also relates to a production system for producing complex composed end products by means of printing devices and finishing devices, wherein the production system comprises a digital process controller according to the invention and a user interface according to the invention.

The invention also relates to a method for controlling a production process of a complex composed end product by means of a digital process controller comprising a multi-device time scheduler and connected to a digital network, the method comprising the steps of receiving content and print and finishing specifications of the complex composed end product via the digital network, receiving a selection of a process recipe for the complex composed end product, the process recipe comprising a plurality of process steps and the relationships between the process steps, decomposing the production process of the complex composed end product into the plurality of process steps, assigning for each process step at least one processing device intended to execute the process step according to the process recipe, deriving for each process step from the process recipe at least one process job to be scheduled by the multi-device time scheduler for execution by the assigned at least one processing device, the at least one process job being a pre-print job, a print job or a finishing job, submitting for each process step the at least one process job to the assigned at least one processing device, providing operator instructions for the processing devices via the digital network to at least one operator computer device or by printing the operator instructions, receiving for each product part status and progress information of the at least one process job from the corresponding at least one processing device during execution of the process step, combining the received status and progress information of the process steps into a status and progress information of the production process of the complex composed end product, and controlling the production process of the complex composed end product by means of the multi-device time scheduler and the status and progress information of the production process of the complex composed end product. According to an embodiment the digital process controller comprises a user interface and the method comprises the steps of providing in a window of the user interface a list of scheduled complex composed end products and a multi-device time schedule comprising the process jobs derived for the production process of the complex composed end product by the digital process controller, receiving a selection of a complex composed end product of the list via the window of the user interface, visually changing an entry of the selected complex composed end product in the list, and simultaneously visually changing the process jobs in the multi-device time schedule derived for the production process of the selected complex composed end product by the digital process controller.

The invention also relates a non-transitory software product comprising program code which, when loaded into a computer having a display, turns the computer into a user interface according to the invention.

The invention also relates to a non-transitory recording medium comprising computer executable program code configured to instruct a computer to perform the method according to the invention.

### BRIEF DESCRIPTION OF THE DRAWINGS

Embodiment examples will now be described in conjunction with the drawings, wherein:
- FIG. 1: is a network diagram comprising a digital process controller according to the present invention;
- FIG. 2: shows a workflow designer application for designing a process recipe according to the present invention;
- FIG. 3: shows a production planner window if a user interface for the digital process controller according to the present invention;
- FIG. 4: illustrates a window for finisher jobs planning and finishing instructions according to the present invention; and
- FIG. 5 - 6: is a flow diagram of the method according to the present invention.

### DETAILED DESCRIPTION OF EMBODIMENTS

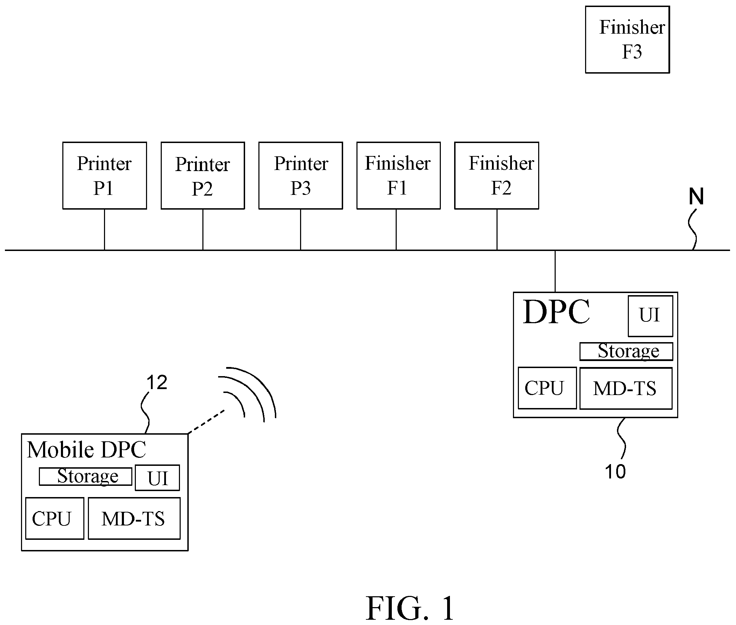

FIG. 1 shows a digital process controller (DPC) 10 for controlling a production process of the complex composed end product by process jobs according to the invention. The digital process controller is connected to a digital network N. According to an embodiment the digital process controller DPC 10 is wire-connected to the digital network N. According to another embodiment the digital process controller DPC 12 is a mobile device which is wireless connected to the digital network N. Both embodiments are shown in FIG. 1. The digital process controller 10, 12 is configured to receive content and print and finishing specifications of the complex composed end product via the digital network N.

The digital process controller 10, 12 comprises - besides a central processor unit CPU, a storage medium, and a user interface UI - a multi-device time scheduler MD-TS. Each product part of the complex composed end product is intended to be processed by at least one processing device. The processing device may also be a computer having a software application installed for execution of a pre-printing process step like preflighting, etc. The processing device may be a printer P1, P2, P3 or a finisher F1, F2 connected to the digital network N. The processing device may also be an off-line finisher, for example a finisher named "Finisher F3" shown in FIG. 1.
The product parts are produced in the process steps according to the process recipe which is designed by a workflow designer application. The workflow designer application may be installed on the digital process controller 10, 12 or elsewhere installed on a work station connected to the digital network N. For each process step at least one process job is derived from the process recipe. The at least one process job is intended to be scheduled in the multi-device time scheduler MD-TS for execution by the corresponding processing device P1, P2, P3, F1, F2, F3.

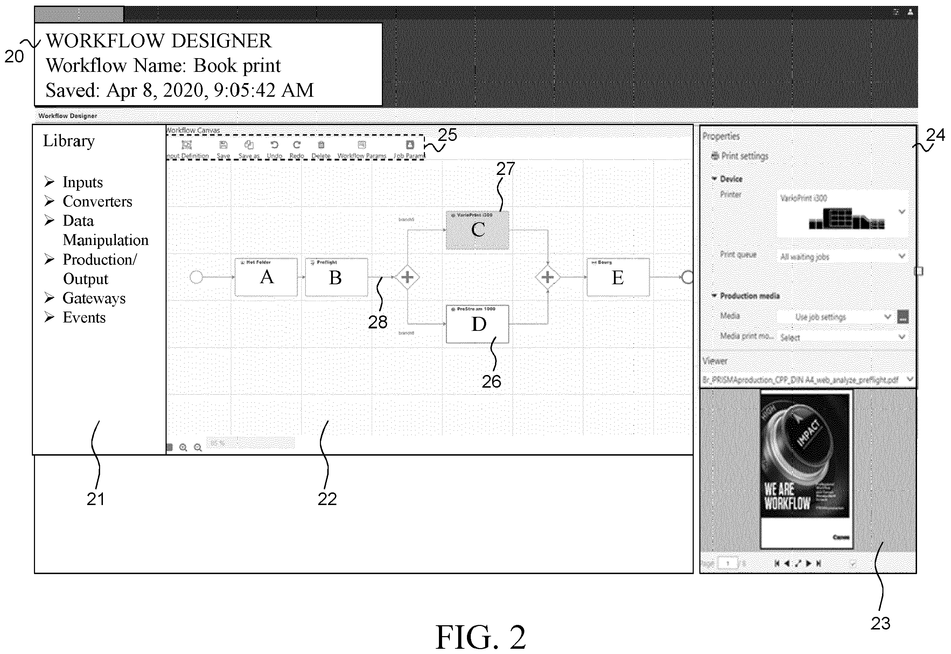

FIG. 2 shows an example of a process recipe 22 designed by a workflow designer application 20. The workflow designer has a library 21 of functions which can be used to construct the process recipe 22. A number of action icons 25 are available to design a workflow of the process recipe 22. The process recipe 22 in the example in FIG. 2 comprises process steps A, B, C, D, E which are characterized by a corresponding process device or by a corresponding process application. In this way the process recipe is represented by a directed graph made up of a set of vertices 27, 28 named "A", "B", "+", "C", "D", "+", "E" connected with edges 28, each edge having an associated direction, wherein the vertices represent the process steps A, B, C, D, E and the direction of an edge between two vertices represents a sequence order of execution of the corresponding process steps.

According to an embodiment the directed graph is a weighted directed graph (not shown), wherein the weight on a vertex of the weighted directed graph represents an estimated execution time of the process step represented by the vertex, the estimated execution time being determined by the digital process controller 10, 12.

The workflow name of the process recipe 22 shown in FIG. 2 is "Book print". Starting in a hot folder A and via a preflight application B, book content is split into a book block for a printing step C and a book cover for a printing step D by means of a first vertex named "+". The process recipe 22 is an example of a recipe which comprises parallel branches C, D. Each branch C, D represents a process step of a product part of the book. After the printer C and the printer D have produced the product parts book block and book cover, a second vertex named "+" merges the product parts produced by printers C and D for assembly of the book block and the book cover according to a finishing process step E by means of finisher.

The workflow designer application 20 also shows a properties area 24 of a selected process step 27 named "C". For example for the printer C print settings are displayed. The print settings may comprise selectable device settings like a device identification by means of a device name or a device image, and a selectable print queue name. The print settings may comprise production media settings like a kind of media and a media print mode.

The workflow designer application 20 also shows a preview area 23 for previewing a part of the book. For example, starting on a front page of the book, the user may leaf through the pages of the book to be produced.

The process recipe selection is not automatic, because for the same complex composed end product multiple and different process recipes may exist. By means of the workflow design application 20 multiple ways of reaching the same complex composed end product may be defined and stored. Therefore the user is flexible to select each one of the stored process recipes.

According to an embodiment process rules are integrated into a process recipe by means of the workflow designer application 20. The rules provide a mechanism called conditional branching, where an evaluation of a condition determines a branch that will be executed. By doing so, alternative strategies are not selected manually, but automatically. For example, if more than 20 books have to be produced, use the process CF, i.e. "Continuous Feed Printing", else use the process CS, i.e. "Cut Sheet Printing" (not shown). For example, if the complex composed end product specifications ask for a laminated cover, a first branch should be followed; otherwise a second branch should be followed. By using the conditional branching mechanism, the number of process recipes is reducible.

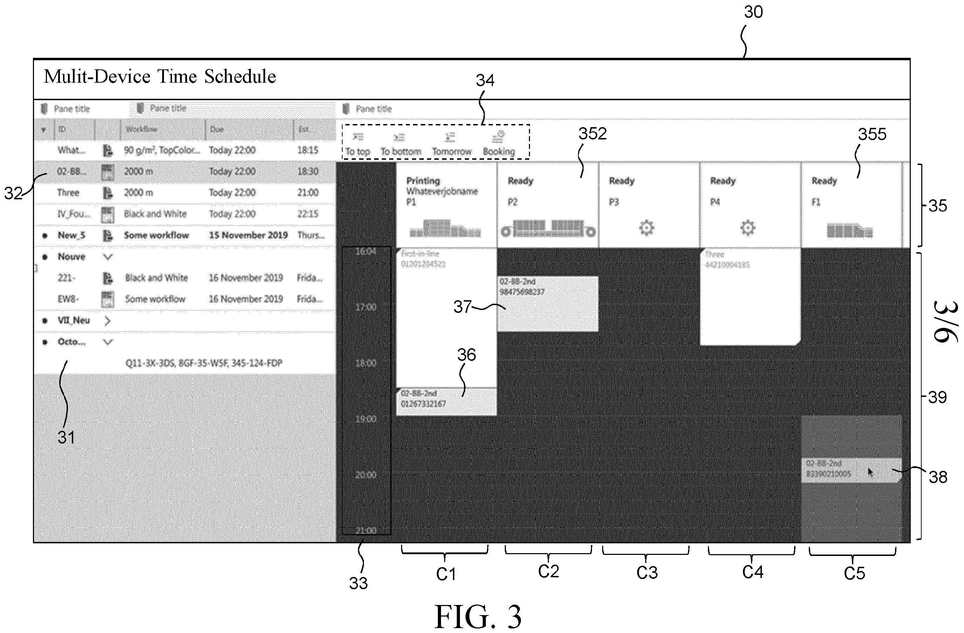

FIG. 3 shows a user interface window 30 of the user interface UI of the digital process controller 10, 12. The user interface window 30 shows a multi-device time schedule which is provided with information by the multi-device time scheduler MD-TS arranged in the digital process controller 10, 12. The multi-device time schedule comprises complex composed end products - already scheduled or to be scheduled. The content, specifications and process recipes of the complex composed end products are received by the digital process controller 10, 12.
At one side of the user interface window 30 a list 31 of selectable complex composed end products is displayed in a sequence order of estimated completion time. The list 31 comprises columns like product ID, recipe name also known as workflow which is used to produce the complex composed end product, a due date for the complex composed end product to be delivered and an estimated time of completion by the process device(s) of the complex composed end product.

At the other side of the user interface window 30 the multi-device time schedule is displayed comprising a user function bar 34 to handle the process jobs in the multi-device schedule, a time line 33, for each process device P1, P2, P3, P4, F1 a column C1, C2, C3, C4, C5 respectively. Each column comprises a block area 39 comprising blocks of process jobs 36, 37, 38 to be processed by the respective devices P1, P2, F1, and a heading area 35 comprising for each process device a title block 352, 355 comprising a status of the process device, for example "Printing", Ready", "Out of Order", etc., and at least one identification item of the process device. An identification item may be a device name. An identification item may be a device image representing the process device. The colour of the image device may correspond to the status of the process device.
According to an embodiment the visual appearance aspect is at least one out of a colour, a shadow, a hatch or at least one deviating dimension or shape of at least one block 36, 37, 38 and the selected entry in the list 31 in the user interface window 30.

A complex composed end product is selectable in the list 31 in the user interface window 30. Upon selection of a complex composed end product in the list 31, for example, complex composed end product 32 having ID "02-BB" by means of a process recipe named "2000 m", an entry of the complex composed end product 32 in the list 31 is visually changed, for example by changing the colour of the entry. Simultaneously, the process jobs 36, 37, 38 in block area 39 derived for the production of the complex composed end product 32 by the digital process controller 10, 12 are visually changed, for example by changing the blocks of the process jobs 36, 37, 38 in the same colour as the entry of the complex composed end product 32 in the list 31. As shown in FIG. 3, the process jobs 36, 37, 38 are scheduled sequentially in time by the multi-device time scheduler MD-TS according to a sequence order in the corresponding process recipe named "2000 m". A user is easily able to see through the multi-device time schedule and among other process jobs for other scheduled complex composed end products mentioned in the list 31, the blocks of process jobs which are responsible for producing the product parts of the complex composed end product selected in the list 31 according to the process steps defined in the process recipe.

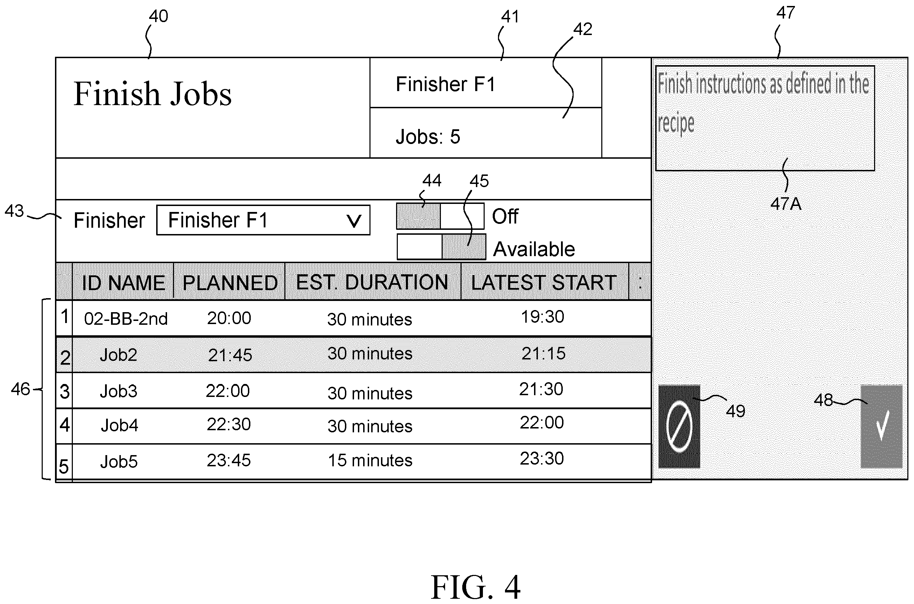

An off-line finisher may also be part of the multi-device time schedule in the user interface window. Finishing instructions for the off-line finisher may be derived from the process recipe and the complex composed end product specifications. When selecting an off-line finisher in the user interface window, for example by clicking on the column header of the column in heading area 35 in FIG. 3, another user interface window 40 pops up which is shown in FIG. 4. The user interface window 40 comprises a device indication 41 and the number of jobs 42 to be processed by the finisher 41. Also a selection item 43 is provided to select another finisher from a dropdown selection list. A first toggle item 44 shows if the finisher is offline or connected to the network or to a printing device. A second toggle item 45 shows if the finisher is available or not.
Also a job queue 46 for the finisher is provided with job data like job ID, a planned time for processing the job, an estimated duration of the job and a latest start moment in time. When a job is selected in the job queue 46, for example a job with job ID Job2, on the right side of the user interface window 40 an image frame 47 is provided with finishing instructions 47A as defined in the process recipe. Also a first button 49 is provided to indicate that the finishing job has not been completed successfully. For example, a book block has been damaged during cutting. A second button 48 is provided to indicate that the finishing job has been processed successfully due to the provided finishing instructions 47A.

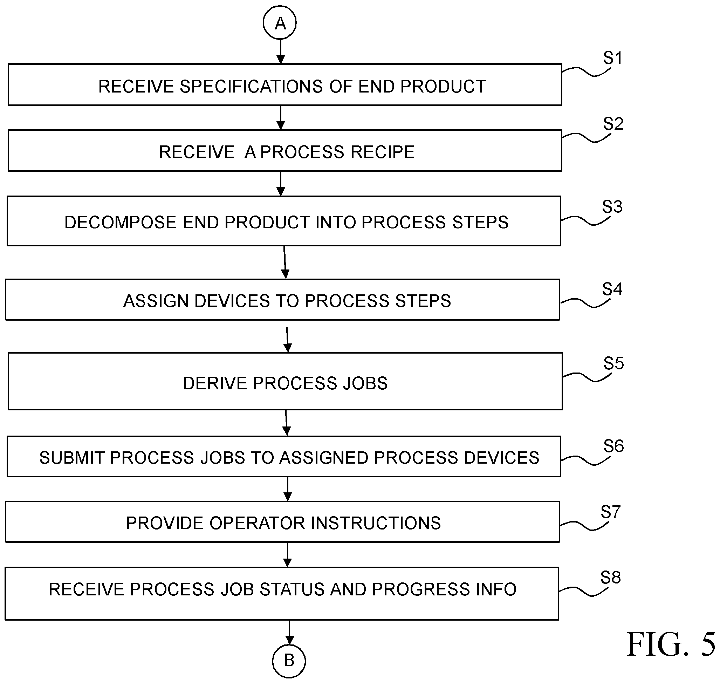

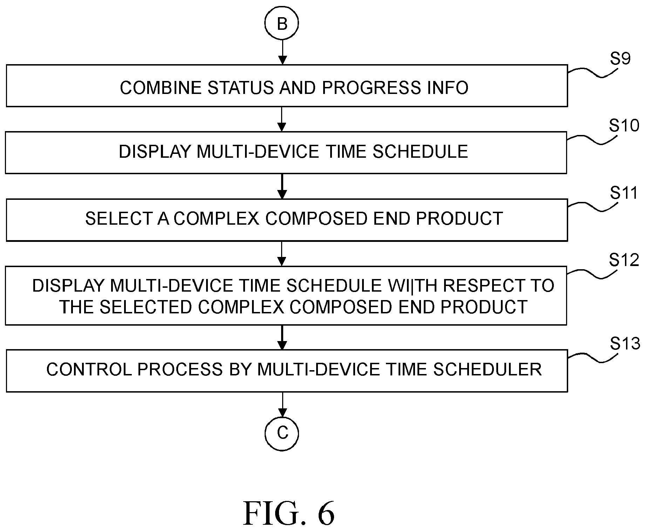

FIG. 5 shows a flow diagram of the method according to the present invention. The method controls the printing and finishing process of the complex composed end product by means of the digital process controller 10, 12 comprising the multi-device time scheduler MD-TS and connected to the digital network N. The method starts in a start point A which leads to the first step S1.
In the first step S1 content and print and finishing specifications of the complex composed end product are received via the digital network N and stored in the storage of the digital process controller 10, 12.
In a second step S2 a selection of a process recipe for the complex composed end product is received. The process recipe comprises the plurality of the process steps and the relationships between the process steps, for example a sequence order of execution of the process steps.
In a third step S3 the production process of the complex composed end product is decomposed into the plurality of process steps. For example, in FIG. 3 the process recipe identified with "02-BB" is selected and decomposed in three process steps 36, 37, 38 which are shown in the multi-device time schedule of FIG. 3.
In a fourth step S4 for each process step at least one processing device intended to execute the process step according to the process recipe is assigned. For example, the process step 36 is assigned to the printing device P1, the process step 37 is assigned to the printing device P2 and the process step 38 is assigned to finishing device F1 as shown in FIG. 3.
In a fifth step S5 for each process step at least one process job is derived from the process recipe. The at least one process job is scheduled in the multi-device time scheduler MD-TS for execution by the assigned at least one processing device. For example three process jobs blocks 36, 37, 38 are derived from the process recipe as shown in FIG. 3.
In a sixth step S6 for each process step the at least one process job is submitted to the assigned at least one processing device according to the multi-device time schedule controlled by the multi-device time scheduler MD-TS. As soon as the process jobs are submitted they will become visible in the multi-device time schedule as shown in FIG. 3. In a seventh step S7 operator instructions for the processing devices are provided via the digital network N to at least one operator computer device or by printing the operator instructions. The operator instructions are printed in case of manually operated devices like an off-line finisher.
In an eighth step S8 for each process step status and progress information of the at least one process job are received from the corresponding processing device during execution of the process step. In FIG. 3 the status and progress information of each involved processing device P1, P2, F1 is shown in the heading area 35 in FIG. 3. The statusses for the processing devices P1, P2, F1 are respectively "Printing", "Ready" and "Ready". The recipe labelled "02-BB" represents a book print recipe which involves one printer P1 for the content of the book and one printer P2 for the cover of the book. The finisher F1 finishes the book, The finisher F1 is for example a bookbinder device. The process recipe displayed in FIG. 2 corresponds to such a book printing process with printing steps C and D and finishing step E. The printing of the book content and book cover may be processed consecutively in time or parallel in time. In the example shown in FIG. 3 the book content and the book cover are printed consecutively in time by the printers P1, P2. The finishing step by finishing device F1 is scheduled in time after the printing jobs by the printers P1, P2.
The method proceeds via an in-between point B to a ninth step S9 which is shown in FIG. 6.
In the ninth step S9 the received status and progress information of the process steps are combined into a status and progress information of a production process of the complex composed end product.

In a tenth step S10 a multi-device time schedule as shown in FIG. 3 is displayed on the user interface. The multi-device time schedule reflects the status and progress information of the production process of a selected complex composed end product. In an eleventh step S11 a complex composed end product is selected from the list 31 in FIG. 3. The complex composed end product labelled "02-BB" is selected in FIG. 3. Upon selection of a complex composed end product from the list 31, the multi-device time schedule is updated in a twelfth step S12 in order to display the process jobs, processing devices and their corresponding status and progress information.
In a thirteenth step S13 the production process of the complex composed end product is controlled by means of the multi-device time scheduler MD-TS and the status and progress information of the production process of the complex composed end product. The method ends in an end point C.

The digital process controller according to the present invention may also have a remote user interface in a cloud environment. According to an embodiment the digital process controller is located in the cloud environment. According to another embodiment the multi-device time scheduler is located in the cloud environment.

## Claims

1. Digital process controller for controlling a production process of a complex composed end product by process jobs, each process job being a pre-print job, a print job or a finishing job, the digital process controller comprising a multi-device time scheduler and connected to a digital network and configured
to receive content and print and finishing specifications of the complex composed end product via the digital network,
to receive a selection of a process recipe for the complex composed end product, the process recipe comprising a plurality of process steps and the relationships between the process steps,
to assign for each process step at least one processing device intended to execute the process step according to the process recipe, and
to display, for each of the assigned processing devices respectively, at least one process job derived for each process step and scheduled by the multi-device time scheduler for execution.

2. A digital process controller according to claim 1, wherein the digital process controller is configured
to decompose the production of the complex composed end product into the plurality of process steps,
to derive for each process step from the process recipe at least one process job to be scheduled by the multi-device time scheduler for execution by the corresponding at least one processing device,
to submit for each process step the at least one process job to the assigned at least one processing device,
to provide operator instructions for the processing devices via the digital network to at least one operator computer device or by printing the operator instructions,
to receive for each product step status and progress information of the at least one process job from the corresponding processing device during execution of the process step,
to combine the received status and progress information of the process steps into a status and progress information of the creation process of the complex composed end product, and
to control the production process of the complex composed end product by means of the multi-device time scheduler and the status and progress information of the production process of the complex composed end product.

3. A digital process controller according to claim 1 or 2, wherein the process recipe is representable by a directed graph made up of a set of vertices connected with edges, each edge having an associated direction, wherein the vertices represent the process steps and the direction of an edge between two vertices represent a sequence order of execution of the corresponding process steps.

4. A digital process controller according to claim 3, wherein the directed graph is a weighted directed graph, wherein the weight on a vertex of the weighted directed graph represents an estimated execution time of the process step represented by the vertex, the estimated execution time being determined by the digital process controller.

5. A digital process controller according to any of the preceding claims, wherein the process recipe comprises parallel branches, each branch representing a process step of the complex composed end product or an alternative process step of the complex composed end product based on conditional branching.

6. A digital process controller according to any of the preceding claims, comprising a track and trace mechanism for tracking and tracing the status and progress information of each process step.

7. A user interface for a digital process controller according to any of the preceding claims, wherein the user interface is configured to display an editable representation of the selected process recipe, an overview of the derived process jobs, an overview of the assigned plurality of processing devices, operator instructions and a device status for each processing device, the status and progress information of the process steps, a multi-device time schedule for the process jobs submitted to the plurality of processing devices, and the status and progress information of the production process of the complex composed end product.

8. A user interface according to claim 7, wherein the user interface is configured to display a list of at least one complex composed end product to be processed, and, upon selection of the complex composed end product from the list, representations of the process jobs derived for the complex composed end product in the multi-device time schedule are distinguishable from representations of process jobs in the multi-device time schedule derived for other complex composed end products from the list by means of a visual appearance aspect of the representations of the process jobs derived for the complex composed end product.

9. A user interface according to claim 8, wherein the visual appearance aspect is at least one out of a colour, a shadow, a hatch or at least one deviating dimension or shape of a box item in the representations.

10. A production system for producing complex composed end products by means of printing devices and finishing devices, wherein the production system comprises a digital process controller according to any of the claims 1 - 6 and a user interface according to any of the claims 7 - 9.

11. A method for controlling a production process of a complex composed end product by means of a digital process controller comprising a multi-device time scheduler and connected to a digital network, the method comprising the steps of receiving content and print and finishing specifications of the complex composed end product via the digital network,
receiving a selection of a process recipe for the complex composed end product, the process recipe comprising a plurality of process steps and the relationships between the process steps,
decomposing the production process of the complex composed end product into the plurality of process steps,
assigning for each process step at least one processing device intended to execute the process step according to the process recipe,
deriving for each process step from the process recipe at least one process job to be scheduled by the multi-device time scheduler for execution by the assigned at least one processing device, the at least one process job being a pre-print job, a print job or a finishing job,
submitting for each process step the at least one process job to the assigned at least one processing device,
providing operator instructions for the processing devices via the digital network to at least one operator computer device or by printing the operator instructions,
receiving for each product part status and progress information of the at least one process job from the corresponding at least one processing device during execution of the process step,
combining the received status and progress information of the process steps into a status and progress information of the production process of the complex composed end product, and
controlling the production process of the complex composed end product by means of the multi-device time scheduler and the status and progress information of the production process of the complex composed end product.

12. A method according to claim 11, wherein the digital process controller comprises a user interface and the method comprises the steps of
providing in a window of the user interface a list of scheduled complex composed end products and a multi-device time schedule comprising the process jobs derived for the production process of the complex composed end product by the digital process controller,
receiving a selection of a complex composed end product of the list via the window of the user interface,
visually changing an entry of the selected complex composed end product in the list, and
simultaneously visually changing the process jobs in the multi-device time schedule derived for the production process of the selected complex composed end product by the digital process controller.

13. A non-transitory software product comprising program code which, when loaded into a computer having a display, turns the computer, into a user interface according to any of the claims 7 - 9.

14. A non-transitory recording medium comprising computer executable program code configured to instruct a computer to perform the method according to any of the claims 11 - 12.
